Europäisches Patentamt

European Patent Office

Office européen des brevets

(19)

(11) Publication number: **0 333 962**
**A1**

# EUROPEAN PATENT APPLICATION

(12)

(21) Application number: **88401746.8**

(22) Date of filing: **05.07.88**

(51) Int. Cl.4: **H01J 31/00 , H01J 29/86 , H01J 29/70**

The title of the invention has been amended (Guidelines for Examination in the EPO, A-III, 7.3).

(30) Priority: **02.02.88 US 151437**
**02.02.88 US 151438**
**02.02.88 US 151439**

(43) Date of publication of application:
**27.09.89 Bulletin 89/39**

(84) Designated Contracting States:
**DE FR GB**

(71) Applicant: **THOMSON ELECTRON TUBES AND DEVICES CORPORATION**
**550 Mount Pleasant Avenue**
**Dover New Jersey 07801(US)**

(72) Inventor: **Seats, Peter**
**THOMSON - CSF SCPI - 19, avenue de Messine**
**F-75008 Paris(FR)**

(74) Representative: **Guérin, Michel et al**
**THOMSON-CSF SCPI**
**F-92045 PARIS LA DEFENSE CEDEX 67(FR)**

(54) **Cylindrical cathode ray tube.**

(57) A CRT utilizes an envelope (21) that is long but narrow, resembling more the envelope of a familiar household fluorescent tube than the funnel-shaped envelope of a conventional CRT whereby there results a more compact structure, as is desired. Moreover, the fiber optics plate (22) is positioned along the side of the tube rather than across the end of the tube. Then advantageously an array of electromagnets (27) is located along the tube and is used to deflect the electron beam magnetically from its normal direction along the envelope axis transversely to be incident on the fiber optics plate along the side of the envelope. By appropriately energizing the successive electromagnets of the array, the electron beam is made to sweep along or scan repetitively the length of the fiber optics plate.

FIG. 2A

COMPENSATED DYNAMIC FOCUSING VOLTAGE SUPPLY

## IMPROVED CYLINDRICAL CRT

### Field of the Invention

This invention relates to a cathode ray tube (CRT) useful for providing signal information to a recording medium, and more particularly to a CRT that is especially configured for scanning essentially along a linear region much narrower than the tube length, to be described as a line scan.

### Background of the Invention and Problems to be Solved

Line scan CRTs are presently important in photo-recording applications. Such tubes typically incorporate a narrow plate of glass fiber optics sealed to the output end of a conventional funnel-shaped envelope and in operation a line-at-a-time video-modulated electron beam is deflected or swept across the phosphor-coated inside surface of the fiber optics plate. Modulated light resulting from electrons incident on the phosphor passes through the fiber optics plate and is made incident onto the surface of a photosensitive recording medium that is in contact with the outer surface of the fiber optics plate. Line scans are repeated sequentially as the medium is moved past the plate in synchronism by means of a stepping motor or continuous drive mechanism attached to a roll or sheet of the medium. Normally, the beam scan is essentially only in the horizontal or (X) direction with the medium moving in the vertical or (Y) direction. Minor modulation of the beam in the (Y) direction is usually included to extend the life of the phosphor. As the scans continue and the medium moves, there is produced on the photosensitive medium an X-Y image that is subsequently developed and fixed in various ways appropriate to the nature of the medium employed.

The use of a fiber optics plate on the output surface of the CRT simplifies the imaging system since the fiber optics collimates the phosphor light, and makes feasible image formation by direct contact to the medium. This desirably makes for compactness in the recorder, by eliminating the conventional lens-type optical system. However, the length and bulk of the CRT itself still militates against achieving a highly compact assembly. Further, while there have been attempts to substitute solid state devices for the CRT, this proves impractical for recorders designed for wide high quality images, for example images as much as fourteen inches wide.

To avoid these problems, the present invention provides a CRT of novel design that makes for increased compactness.

### Summary of the Invention

A CRT in accordance with the invention utilizes an envelope that is long but narrow resembling more the envelope of the familiar household fluorescent tube than the funnel-shaped envelope of a conventional CRT whereby there results a more compact structure, as is desired. Moreover, the fiber optics plate is positioned along the side of the tube rather than across the end of the tube. Then advantageously an array of electromagnets is located along the tube and is used to deflect the electron beam magnetically from its normal direction along the envelope axis transversely to be incident on the fiber optics plate along the side of the envelope. By appropriately energizing the successive electromagnets of the array, the electron beam is made to sweep along or scan repetitively the length of the fiber optics plate. Moreover, to improve the efficiency and increase the compactness of the electromagnet deflection structure, various stratagems can be employed.

In the preferred embodiment of the invention, the tube envelope additionally is of a design that provides for the electron beam a path therethrough that is displaced from the envelope axis along the region of deflection.

Alternatively, electrostatic deflection can be used for redirecting the electron beam for the linear scan of the sidewall faceplate.

Moreover, in accordance with another feature of the invention, to permit calibration and adjustment, a cylindrical CRT of the kind described is provided with a coating, at the downstream end of the envelope, aligned with the electron gun to intercept the electron beam in the absence of any magnetic deflection. Moreover, this coating is patterned appropriately to divide it into discrete segments, each of which is separately monitored, so that comparison of amounts of electrons intercepted by the different segments can be used to determine the position of the beam as it is intercepted by the coating. Thereafter the monitoring signals are used to reposition the beam as desired. Moreover, the measurement of the total output from the coating can be used to monitor and control the total current in the electron beam.

The coating in the preferred embodiment is luminescent so that the incident electrons excite the emission of light that can be detected by appropriate sensors. Alternatively, the coating may be non-luminescent and the incident electrons measured directly.

Additionally, various techniques are included to provide that the electron beam remains focused and of essentially uniform effective size as it sweeps along the fiber optics plate.

The invention will be better understood from the following more detailed description taken in conjunction with the accompanying drawing.

Brief Description of the Drawing

FIGS 1A and 1B are end and side views of a conventional CRT for use in a line-scan recorder.

FIG 2A is a longitudinal section of a CRT in accordance with an illustrative embodiment of the invention taken along the tube axis, and FIG 2B is a sectional view taken along the line BB of FIG 2A to show the structure of one of the electromagnets of the array used for deflecting the electron beam transversely for incidence on the fiber optic plate.

FIG 3 is a longitudinal section of a CRT in accordance with an alternative embodiment of the invention.

FIG 4A is a longitudinal section of another embodiment of the invention, and FIG 4B is a section taken along line BB of FIG 4A.

FIG 5A is a longitudinal section of another embodiment of the invention, and FIG 5B is a section taken along the line BB of FIG 5A.

FIG 6 shows a side view of a simple form of CRT previously shown, modified in accordance with the invention to include an additional electromagnet to provide a transverse deflection to the electron beam

FIG 7 shows the end surface of the CRT of FIG 1 provided with a patterned electroluminiscent coating to facilitate adjustment and calibration.

Description of the Invention

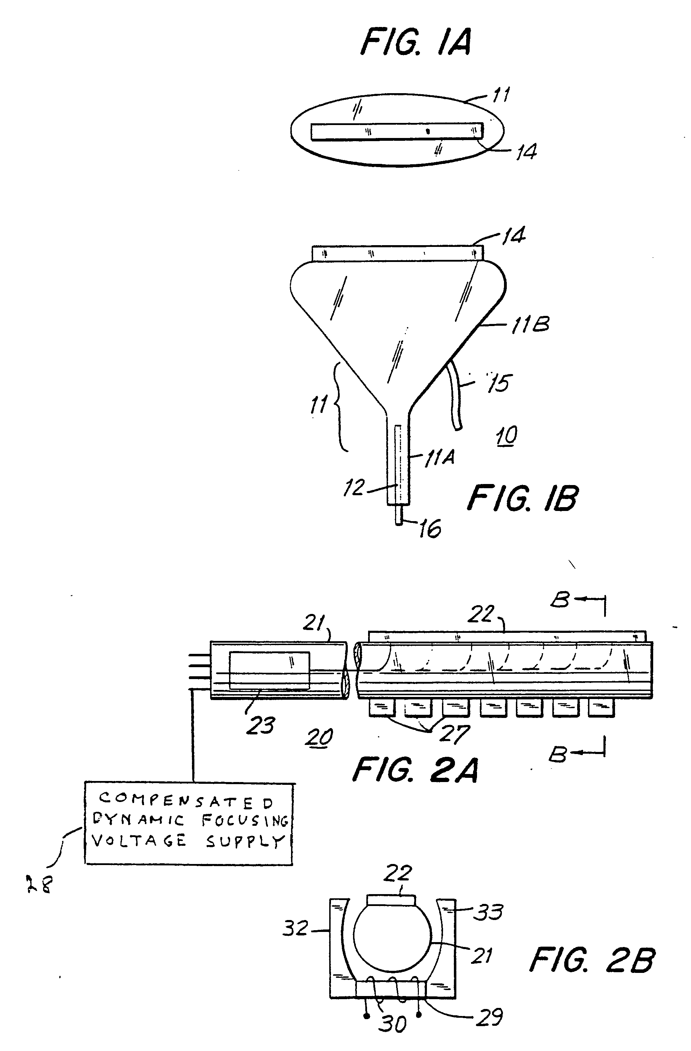

FIGS 1A and 1B show the conventional form of CRT used in line scan recorders. It includes a funnel-shaped envelope 11, typically of glass, that includes an elongated neck portion 11A that houses the electron gun 12, and a flaring portion 11B that widens to provide an output end of enlarged width that accommodates the fiber optic faceplate 14. The surface of the faceplate inside the envelope is coated with a suitable phosphor that is sensitive to the incident electrons. Light excited at this inner surface by the incident electrons is transmitted via the fibers to the outside surface of the faceplate where it is used to create an image in the photosensitive medium (not shown) as it is moved past the faceplate.

Typically, the inside sidewalls of the envelope are coated with a conductive film that is maintained at a suitable high d-c potential by way of lead 15 for accelerating the electrons for incidence on the faceplate.

The electron gun 12 in the neck of the tube is designed to shape the electrons emitted into a beam and accelerate the beam towards the faceplate. Deflection coils (not shown) positioned around the flare of the envelope and supplied with appropriate currents are used to sweep the electron beam repetitively linearly across the faceplate. A control grid in the electron gun is used to modulate the electron beam in accordance with signal information to be recorded. The various operating voltages needed for the electron gun are supplied by way of the pins 16 at the neck end of the tube.

It can be appreciated that this tube design is relatively bulky, the bulk largely resulting from the flaring portion 11B of the envelope of the tube.

In the present invention, a reduction in bulk is achieved by substantially eliminating the flared portion of the envelope and by locating the fiber optic plate along a sidewall of the unflared envelope.

FIGS 2A and 2B illustrate the simplest form of a cathode ray tube 20 in accordance with the invention. The tube envelope 21 is a simple elongated cylinder of essentially circular cross section along substantially its entire length. Typically this cylinder may be about one and a half inches in diameter and about twenty inches in length to accommodate a fiber optic plate 22 of about fourteen inches that extends along a sidewall. One end of the tube includes the electron gun 23 that may be basically of conventional design. Typically it may be designed to form an electron beam of circular cross section and initially about twenty-five mils diameter and to focus or converge this beam to a diameter of several mils at its focal point. Moreover, it will be advantageous to include provision in the electron gun for varying the focal point electronically along the tube for reasons to be discussed subsequently.

The fiber optic faceplate 22 is positioned in a sidewall of the envelope primarily along the downstream half of the tube. In the usual fashion, the faceplate surface inside the envelope is coated with a phosphor while the surface outside the envelope is adapted to contact the recording medium. The fiber optic plate typically is about fourteen inches long and about a half-inch wide of fused fibers each about ten to fifteen microns in diameter, and the beam incident on the strip typically has a diameter of between two and three mils. Provision is made for periodically perturbing the beam in the width direction of the strip by several mils as it sweeps along the length of the fiber, to avoid excessive aging of the phosphor by repetitive traces along the exact same path. The movement of the recording medium advantageously is sufficiently slow relative to the speed of the scan to permit several repetitive scans of the same information on the strip to improve the signal-to-noise ratio based on the familiar principle that the noise will add on a random basis while the signal will add cumulatively. Additionally, multiple scans with a slight perturbation will provide a desirable averaging effect that will reduce granularity and streaking.

Additionally, the CRT is provided with a plurality of electromagnets 27 aligned in a linear array essentially along the same portion of the envelope that includes the faceplate 22. Each of these electromagnets is designed so that when energized it will deflect the electron beam going therepast from its axial direction to a transverse direction for incidence on the portion of the faceplate alongside it. The electromagnets of the array are energized in turn so that the electron beam is deflected appropriately to scan the linear strip of optical fibers continuously from one end to the other at a smooth and uniform rate.

As is known, the degree of deflection will depend both on the strength of the magnetic deflecting field, the velocity of the electrons in the beam at the time of deflection, and the distance the electrons go after deflection before incidence on their target.

It is generally most convenient to vary the strength of the deflecting field by varying the current supplied to the coils of the electromagnets. To this end, the deflecting array is driven by a power supply that provides on a cyclic basis a series of wave forms which are supplied in turn to the coils of the successive electromagnets of the array, so that each electromagnet is energized in turn. Moreover, each of the pulses has an amplitude that gradually decreases with time so that the deflecting radius similarly decreases to provide a sweeping action.

Typically each electromagnet can be used to control a length of about one and one-eighth inches of the strip, so that for a strip fourteen inches long, about fifteen electromagnets should be assembled in an array, including two or three to establish the beginning of the deflecting field.

In FIG 2B there is seen in detail the basic structure of an individual electromagnet 27 of the array. It includes a core portion 29 about which is wound a coil 30 to which is supplied an energizing current. Pole pieces 32 and 33, extending from opposite ends of the core 29 on opposite sides of the envelope 21, create a magnetic field that extends transversely across the envelope so that an electron beam flowing axially inside the envelope is deflected in a direction transverse to that flow and transverse to the magnetic lines, for incidence on the faceplate 23 in the sidewall portion of the envelope equidistant from the two pole pieces as shown by lines 25. It is, of course, unnecessary that the beam be deflected at a ninety degree angle and typically the deflection angle will be between thirty and sixty degrees because of the shortness of the region over which the deflecting field acts.

It is advantageous that the scan of the faceplate by the beam be relatively smooth. However, a variety of scanning patterns are feasible.

For example, for each scan the beam may be deflected in turn by successive electromagnets in the downstream direction of the electron flow, i.e., a line scan begins by deflection first by the upmost electromagnet (i.e., the one closest to the electron gun). In this case for unidirectional scan by successive electromagnets, the degree of deflection introduced by any particular electromagnet needs to peak at the time such electromagnet takes over and to gradually reduce until the succeeding electromagnet takes over. This requires that the magnetizing current supplied to an individual coil have a pulse waveform which peaks at its leading edge and gradually reduces to its trailing edge.

Alternatively, by appropriately processing the input signal applied to the CRT, there may be utilized a deflection arrangement in which the line scan moves in the direction opposite that of the electron flow. In this case, each line scan begins by deflection of the beam by the downmost electromagnet and is continued by deflection by its upstream neighbor. In this case, for a time-continuous unidirectional scan, the waveform of the magnetizing current to each coil should be a pulse whose amplitude increases between its leading the trailing edge.

Moreover, it should be evident that by appropriate processing of the signal information before it is applied to the CRT for recording, a scanning pattern may be utilized in which the line scan comprises a succession of scans each in a given direction, either the same or opposite that of the beam, but the scan provided by successive electromagnets is not continuous with time in that each scan does not begin in time at the point in space where the preceding scan ended. With such a signal, it is feasible to begin the scan with the upmost electromagnet and to supply a magnetizing current to each coil of pulses whose amplitude increases from its leading to trailing edge.

For optimum reproduction quality, it is important that the electron beam be sharply focused as it is swept along the faceplate. To this end, it is desirable that the electron beam be focused at the time that it is deflected. Since the path length of the beam from its source to the point of deflection is varying with time, it is advantageous to adjust the focus voltage continuously for optimum focus as a function of the beam deflection location. This technique, termed dynamic focusing, is well known in the art. However, it is also known that dynamic focusing typically provides a focused spot size that increases with increasing distance away from the source. For optimum reproduction quality, it is important to use a scanning spot of relatively uniform size and independent of the position along the faceplate.

To this end, it is advantageous to apply a second correction to the dynamic focusing to adjust the focused spot size. This can be achieved with an offsetting defocusing waveform superimposed on the dynamic focus voltage, or by rapidly perturbing transversely the electron beam slightly, the amplitude of the perturbation decreasing with increasing distance from the source end to compensate for the increasing focused spot size with increasing distance along the beam path.

The first approach is depicted schematically in FIG 2 by showing a compensated dynamic focusing voltage supply 28 connected to the pin for the beam-focusing electrode of the electron gun 14. This supply is designed to superpose a defocusing component in a positive direction on the standard dynamic focusing wave whose amplitude varies appropriately to achieve the result described above.

Alternatively, to make the spot effectively of uniform size as it sweeps across the fiber optics plate, the focused spot may be subjected to a high frequency oscillating deflection in the direction of sweep along the fiber optics plate. The amplitude of such deflection should vary inversely with the diameter of the focused spot as such spot grows in size with increasing distance from the gun to compensate for such variation whereby the effective area of the beam impingement on the fiber optics plate remains constant.

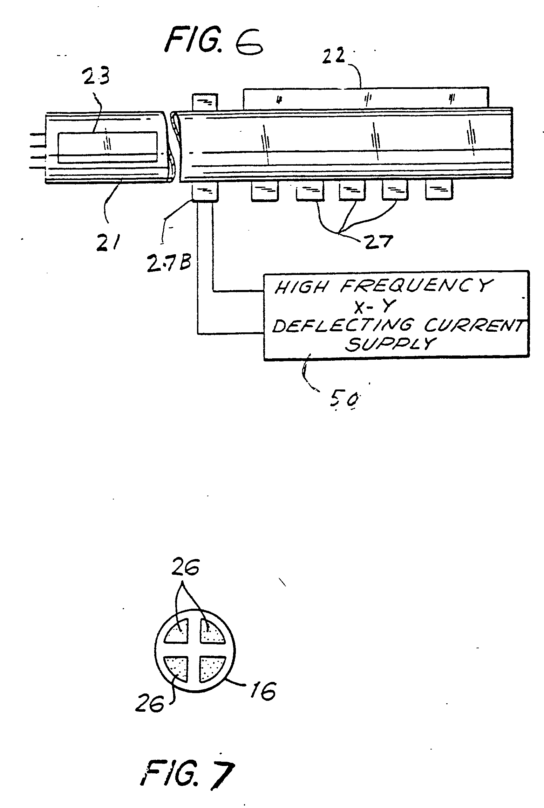

A possible arrangement to this end is shown in FIG 6. The CRT in most respects may resemble that shown in FIG 2A and includes the cylindrical envelope 21 at one end of which is located the electron gun 23. Positioned along a sidewall of the envelope 21 is the fiber optics plate 22. Positioned opposite the face plate in the manner shown in FIG 2B is the array of electromagnets 27. Additionally in this embodiment, there is included an additional electromagnetic 27B that surrounds the envelope intermediate between the electron gun portion and the fiber optics plate portion. This electromagnet is supplied with a high frequency oscillating current from supply 50. This current is designed such that electromagnet 27B will subject the electron beam, before it undergoes transverse deflection to be incident on the faceplate, with a small oscillation in the transverse direction. The amplitude of this oscillation decreases in phase with the scanning rate to compensate for the variation in spot size as the focus is varied along the length of the beam path tc occur where the beam is subjected to the transverse deflection provided by the array of electromagnets 27.

In the embodiments described at the time of deflection, the beam is essentially centered along the axis of the envelope. This results in some inefficiency since little use is made for deflection of the radial separation of the beam from the envelope. A more efficient configuration is one in which the electron beam at the time of deflection is located proximate the core portion of each electromagnet.

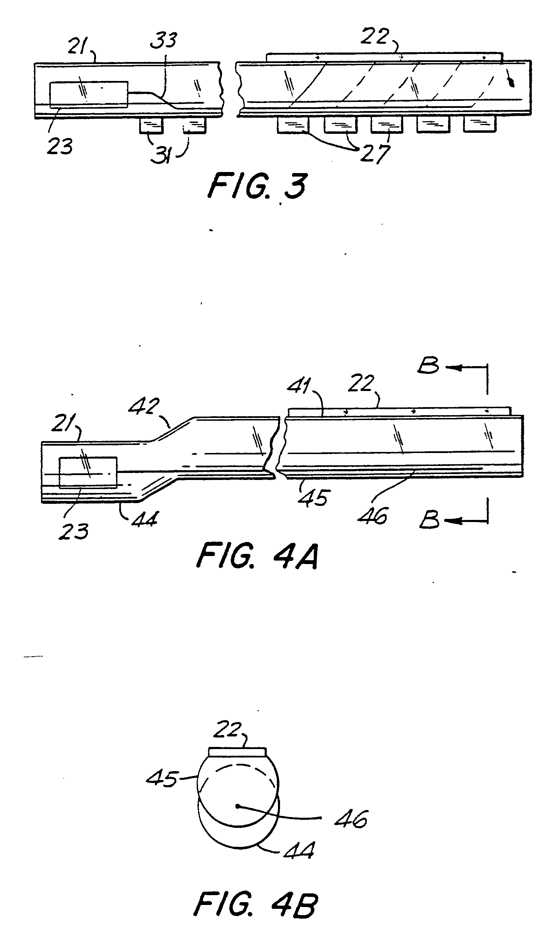

FIG 3 illustrates one technique to this end. A pair of electromagnets 31 are located just beyond the electron gun along the envelope, and they are used to displace the electron beam that is launched initially in a direction along the central longitudinal axis of the envelope for flow along a longitudinal path located near the bottom of the envelope, as shown by the lines 33, close to the core portions of the electromagnets. By so locating the beam, it is apparent that there is increased effectively the distance over which the beam may be deflected before it is incident on the faceplate, thereby reducing the radius of the deflection needed and the strength of the magnetic field needed for the deflection. This similarly reduces the amount of energizing current needed to be supplied by the electromagnet.

An alternative technique illustrated in the embodiment shown in FIGS 4A and 4B is to distort axial symmetry of envelope 41 by inclusion of the bend 42 in the envelope. This divides the envelope into two sections 44 and 45 whose central axes are displaced, so that the beam, although not displaced in direction, will nevertheless proceed on a path close to the bottom of the envelope in the region opposite the faceplate, although initially launched on a path along the central axis of the gun end of the envelope. In this figure, the electromagnets have not been shown to simplify the drawing.

A related technique for effectively increasing the length of the deflection path available would include increasing the diameter of the envelope. This requires longer or larger magnetic pole pieces and consequently undesirably enlarges the entire assembly.

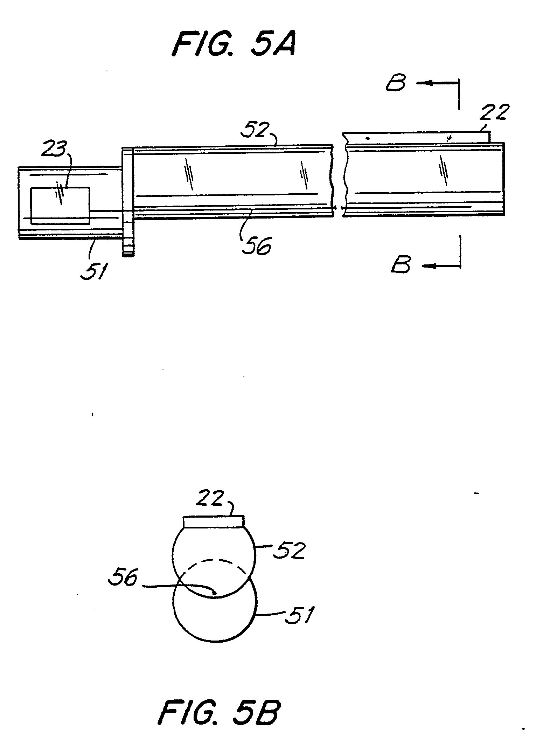

A preferred technique is illustrated in FIGS 5A and 5B. In this case, the envelope is made in two separate cylindrical circular sections 51, 52, each of which is fused to a transition section 54 and aligned to provide an effective step in the resulting envelope whereby the electron beam flows along the path shown by the solid line 56. Accurate assembly in the desired alignment is readily achieved by facing the ends of the two sections on a 90 degree glass grinder and by providing a precision jig to hold the two parts in the designed alignment during the sealing steps.

As an added advantage in the use of this geometry, the high voltage connection 58 to the conductive coating included in the inside walls of the envelope used for accel erating the beam can be brought out, as shown, near the transition 54.

It should be apparent that envelopes of other cross-sections can be used, for example, V-shaped or U-shaped, so that most of the cross-section can be used for deflection of the beam.

As discussed above, in CRTs of the kind described, it is particularly important to calibrate and adjust the electron beam current and beam position. Moreover, it is difficult to monitor the electron beam on the sidewall fiber optics faceplate to effect such calibration and adjustment.

To permit such calibration and adjustment, a cylindrical CRT of the kind described is provided with a coating, at the downsteam end of the envelope, aligned with the electron gun to intercept the electron beam, in the absence of any magnetic deflection, to make it incident on the envelope end wall. Moreover, as seen in FIG 7, this coating 26 on the inner surface of end wall 16 is patterned appropriately to divide it into discrete segments, each of which is separately monitored, so that comparison of amounts intercepted by the different segments can be used to determine the position of the beam as it is intercepted by the coating. Thereafter the monitoring signals are used to reposition the beam as desired. Moreover, the direct measurement of the total output from the coating can be used to monitor and control the total current in the electron beam.

In the absence of exciting currents supplied to the electromagnets, the electron beam will flow past the array of electromagnets undeflected and impinge on the end plate 16 of the envelope. The end plate 16 is maintained at a suitable potential to attract the electron beam.

Advantageously, the coating 26 is luminescent and the flux distribution of the excited light is monitored. To this end, a separate light sensor for each segment is positioned behind the plate so that the light from each segment may be monitored for comparison. Typically the coating is divided into at least three segments, four are shown here. A variety of patterns may be used, depending on the mode of control being effected. In the monitoring mode, it may be desirable to defocus the beam to ease the position discrimination and measurement of total current.

Alternatively, by incorporating a grid structure in the coating pattern and perturbing the beam with a minor positioning signal, spot resolution and degree of focus can be measured.

Similarly, by applying positioning signals and measuring spot displacement, positioning currents can be also measured and calibrated.

Moreover, in some instances it may be unnecessary to pattern the coating, particularly if only beam current intensity is being monitored.

It can be appreciated that considerable flexibility is provided by integrating the current of the undeflected beam at the end of the tube envelope and measuring it.

It should also be appreciated that the number and distribution of electrons incident on the end plate of the tube can be measured directly rather than indirectly. In this case, the coating 26 at the end plate need not be luminiscent for emitting light in response to the incident electrons but rather may be of the type used in storage tubes to permit measurement of the incident electrons either capacitively or directly. In the latter case, there would be need for a conductive connection to each coating segment through the glass end plate.

It can be appreciated that the end plate coating can be used with any of the tube shapes discussed previously so long as the shape does not preclude a straight path between the beam and the coating.

It is understood that the various arrangements described are merely illustrative of the general principles of the invention. Various modifications may be devised without departing from the spirit and scope of the invention.

Moreover, while the emphasis has been on magnetic deflection of the electron beam, electrostatic deflection can be used to provide the transverse deflection for incidence on the sidewall faceplate. This technique would utilize an array of electrodes disposed along the tube envelope to which are applied in turn voltages appropriate for bending the electron beam electrostatically in a manner analogous to the magnetostatic deflection described above.

## Claims

1. A cathode ray tube comprising means forming a tube envelope, means at one end of the tube envelope for forming an electron beam and launching the beam longitudinally along a first path in the tube envelope in a first direction, and means for modulating the electron beam in accordance with signal information characterized in that electron-sensitive means are disposed longitudinally along an extended sidewall portion of the tube envelope, and

means are disposed along said extended sidewall portion for deflecting the electron beam transversely from the first direction for scanning the electron-sensitive means periodically.

2. A cathode ray tube in accordance with claim 1 in which the deflecting means is an array of electromagnets adapted to be supplied with periodic deflecting signals.

3. A cathode ray tube in accordance with claim 1 in which the electron-sensitive means is a fiber optics plate.

4. A cathode ray tube in accordance with claim 1 in which the tube envelope includes first and second portions which are not coaxial and the first portion includes the beams forming means and the second portion includes the electron-sensitive means.

5. A cathode ray tube in accordance with claim 4 in which each of the first and second portions are cylindrical with their axes parallel but transversely displaced.

6. A cathode ray tube in accordance with claim 1 in which the downstream end of the envelope includes a coating of electron-sensitive material for monitoring the number of electrons incident on the coating in the absence of beam deflection.

7. A cathode ray tube in accordance with claim 6 in which the coating is patterned into separate segments whereby the distribution of incident electrons in the absence of beam deflection may be monitored.

8. A cathode ray tube in accordance with claim 1 further characterized by means for maintaining the electron beam focused at its point of transverse deflection and effectively of uniform size as it scans the electron- sensitive means.

9. A cathode ray tube in accordance with claim 8 in which said maintaining means comprise means for applying a compensating voltage on the dynamic focusing element of the means for forming an electron beam.

10. A cathode ray tube in accordance with claim 2 that further includes along the tube envelope downstream from the means for forming the electron beam and upstream of the array of electromagnets an electromagnet for providing transverse oscillations on the electron before its deflection by the array of electromagnets.

11. A cathode ray tube in accordance with claims 4 and 6.

12. A cathode ray tube in accordance with claims 4, 6 and 10.

13. A cathode ray tube in accordance with claims 4 and 10.

FIG. IA

FIG. IB

FIG. 2A

COMPENSATED DYNAMIC FOCUSING VOLTAGE SUPPLY

FIG. 2B

FIG. 3

FIG. 4A

FIG. 4B

## FIG. 5A

## FIG. 5B

# FIG. 6

23    22

21

27B

27

HIGH FREQUENCY
X-Y
DEFLECTING CURRENT
SUPPLY

50

26

26    16

# FIG. 7

European Patent Office

Application number

| | DOCUMENTS CONSIDERED TO BE RELEVANT | | EP 88401746.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | GB - B - 890 395 (MULLARD) | 1,2 | H 01 J 31/00 |
| A | * Totality * | 4-5,9, 11-13 | H 01 J 29/86 |
| | -- | | H 01 J 29/70 |
| Y | PATENT ABSTRACTS OF JAPAN, unexamined applications, E field, vol. 8, no. 250, November 16, 1984 THE PATENT OFFICE JAPANESE GOVERNMENT page 108 E 279 * Kokai-no. 59-127 348 (SONY) * | 1,2 | |
| | -- | | |
| A | GB - B - 865 666 (MULLARD) * Fig. 19-20; claims * | 1,2 | |
| | -- | | |
| A | US - A - 3 662 204 (HAMANN) * Fig. 1,3; column 5, lines 68-71 * | 3 | TECHNICAL FIELDS SEARCHED (Int. Cl.4) |
| | -- | | H 01 J 31/00 |
| A | US - A - 4 342 949 (HARTE) * Abstract; claims 31,32,35 * | 9 | H 01 J 29/00 H 01 J 3/00 |
| | ---- | | |

The present search report has been drawn up for all claims

| Place of search | Date of completion of the search | Examiner |
|---|---|---|
| VIENNA | 20-04-1989 | BRUNNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82